# EUROPÄISCHE PATENTANMELDUNG

(11) **EP 1 365 172 A2**
(43) Veröffentlichungstag der Anmeldung: **26.11.2003**
(21) Anmeldenummer: 03010234.7
(22) Anmeldetag: 07.05.2003
(51) Int. Cl.: F16H 7/12

(54) **Zugmittelspanneinrichtung**

(30) Priorität: 22.05.2002 DE 10223008
(71) Anmelder: CLAAS Selbstfahrende Erntemaschinen GmbH, 33428 Harsewinkel (DE)
(72) Erfinder: Lepke, Paul, 33428 Harsewinkel (DE); Schwenk, Ingo, 33330 Gütersloh (DE); Dückinghaus, Heinrich, 33649 Bielefeld (DE)

(57) **Zusammenfassung**

Die Erfindung betrifft eine Zugmittelspanneinrichtung (2) eines Zugmittelgetriebes (1), dessen Zugmittel (7) von Umlenkelementen (3) geführt und angetrieben wird, wobei dem Zugmittel (7) wenigstens eine mittels wenigstens eines Verstellantriebs (18, 19) verschwenkbare Spanneinrichtung (15) zugeordnet ist und durch Verschwenken der Spanneinrichtung (15) deren Spannelement (12) mit dem Zugmittel (7) in und außer Eingriff bringbar ist und das Spannelement (12) mit dem wenigstens einen Verstellantrieb (18, 19) über zumindest ein elastisches Element (32) in Wirkverbindung steht.

Auf diese Weise wird sichergestellt, dass die durch den Verstellantrieb (18, 19) hervorgerufene Bewegung des Spannelementes (12) so beeinflusst werden kann, dass das Spannelement (12) einerseits zügig an das Zugmittel (7) herangeführt werden kann und zum Anderen einen niedrigen Verschleiß verursachend mit niedriger Geschwindigkeit auf das Zugmittel (7) auftrifft und dieses in einer Anfangsphase schlupfzulassend spannt.

## Beschreibung

Die Erfindung betrifft eine Zugmittelspanneinrichtung eines Zugmittelgetriebes gemäß dem Oberbegriff des Anspruchs 1.

Eine gattungsgemäße Zugmittelspanneinrichtung ist in der DE 41 17 530 offenbart. Einer treibenden sowie einer getriebenen Riemenscheibe sind ein endlos umlaufender Riemen zugeordnet, dessen Spannung mittels einer verschwenkbaren Spannrolleneinheit einstellbar ist. Die Verschwenkbarkeit der Spannrolle wird dadurch erreicht, dass die Spannrolle drehbeweglich an einer Haltestrebe angeordnet ist und die Haltestrebe anderenends verschwenkbar von einer gestellfesten Halterung aufgenommen wird. An der Haltestrebe greift ein Verstellorgan an, welches die Haltestrebe um ihre gestellfeste Schwenkachse bewegen kann. Während dieser Schwenkbewegung gelangt die Spannrolle mit dem Zugmittel in Wirkverbindung und lenkt dieses aus, sodass sich die Spannung je nach Schwenkrichtung der Spannrolle erhöht oder verringert. Ist das Verstellorgans der Spannrolle als Druckmittelzylinder ausgeführt, kann die Spannrolle beliebig ausgelenkt werden, wobei die Geschwindigkeit mit der die Spannrolle zum Zugmittel und von diesem weg bewegt wird maßgeblich von der Geschwindigkeit der aus dem Kolben heraustretenden oder in diesen einfahrenden Kolbenstange beeinflusst wird und in der Regel so eingestellt ist, dass die Spannrolle mit niedriger Geschwindigkeit auf das umlaufende Zugmittel trifft, sodass der Verschleiß des Zugmittels im Moment des Einkuppelns niedrig ist. Derartige Ausführungen haben aber den Nachteil, dass die Spannrolle auch zunächst mit niedriger Geschwindigkeit an das Zugmittel herangeführt wird was letztlich den Einschaltvorgang des Zugmittels insgesamt erheblich verlangsamen kann.

Der Erfindung liegt deshalb die Aufgabe zugrunde, eine Zugmittelspanneinrichtung eines Zugmittelgetriebes so weiterzubilden, dass schnelle Ein- und Auskuppelvorgänge möglich werden und der Verschleiß des Zugmittels während dieser Schaltvorgänge gering bleibt.

Erfindungsgemäß wird die Aufgabe durch eine Zugmittelspanneinrichtung für Zugmittelgetriebe mit den kennzeichnenden Merkmalen des Anspruchs 1 gelöst.

Indem zunächst das Spannelement mit dem wenigstens einen Verstellantrieb über zumindest ein elastisches Element in Wirkverbindung steht wird sichergestellt, dass die durch den Verstellantrieb hervorgerufene Bewegung des Spannelementes so beeinflusst werden kann, dass das Spannelement einerseits zügig an das Zugmittel herangeführt werden kann und zum Anderen einen niedrigen Verschleiß verursachend mit niedriger Geschwindigkeit auf das Zugmittel auftrifft und dieses in einer Anfangsphase schlupfzulassend spannt.

Eine konstruktiv besonders einfache Ausführung der erfindungsgemäßen Spanneinrichtung ergibt sich dann, wenn das Spannelement drehbar von wenigstens einem Schwenkmechanismus aufgenommen wird, welcher gelenkig mit dem wenigstens einen das Spannelement mit dem Verstellantrieb verbindenden elastischen Element gekoppelt ist.

Eine besonders raumsparende und effektive Zugmittelspanneinrichtung wird dann erreicht, wenn der Verstellantrieb als Hubzylinder ausgeführt ist, dessen Kolbenstange von zumindest einem ersten Kolbenstangenelement und zumindest einem weiteren Kolbenstangenelement gebildet wird, wobei beide Kolbenstangenelemente gegeneinander verschiebbar sind und zwischen sich das elastische Element aufnehmen. Der geringste Raumbedarf wird dann benötigt, wenn die Kolbenstange des Hubzylinders selbst das erste Kolbenstangenelement bildet und von einer Durchgangsbohrung durchsetzt wird, in der das als Tauchkolben ausgeführte weitere Kolbenstangenelement bewegbar ist.

Eine hohe Flexibilität in den Schaltvorgängen wird dann erreicht, wenn der Hubzylinder als doppeltwirkender Hubzylinder ausgeführt ist.

Wird der kolbenstangeseitigen Druckkammer des Hubzylinders zudem eine in Parallelschaltung angeordnete Drosselventil - Rückschlagventil - Kombination zugeordnet, wobei die Sperrrichtung des Rückschlagventils von der kolbenstangenseitigen Druckkammer zu den nachgeordneten Organen verläuft, ist sichergestellt, dass die Zugmittelspanneinrichtung das Zugmittel mit niedriger Geschwindigkeit einkuppelt und im Moment des Auskuppelns schnell von dem Zugmittel wegbewegt wird. Dies führt beim Einkuppeln der Zugmittelspanneinrichtung zu einer den Verschleiß minimierenden allmählichen Zunahme der Belastungen im Zugmittelgetriebe. Zudem ermöglicht die Kombination aus Drosselventil und elastischem Element eine schnelle Bewegung des Spannelementes zum Zugmittel und eine langsamere Bewegung des Spannelements ab dem Kontakt des Spannelementes mit dem Zugmittel, wobei die unterschiedlichen Bewegungsphasen selbsttätig ablaufen. Dies verkürzt einerseits den Schaltvorgang und entlastet zudem den Bediener, da dieser den Einkuppelvorgang nur noch auslösen aber nicht mehr überwachen muss.

Eine kosntruktive besonders einfache Ausführung wird zudem dann erreicht, wenn das elastische Element als Druckfeder ausgeführt ist und seine Einbaulage durch in die Kolbenstangenelemente eingearbeitete Anschläge begrenzt wird. Dies hat zudem den Vorteil, dass die Druckfeder unter Vorspannung integriert werden kann, wobei die in der vorgespannten Feder gespeicherte Energie einen zügigen Auskuppelvorgang der Zugmittelspanneinrichtung unterstützt.

Weitere vorteilhafte Ausgestaltungen sind Gegenstand weiterer Unteransprüche und werden nachfolgend anhand von Zeichnungen näher erläutert.

Es zeigen:
- Figur 1: eine schematische Darstellung einer Zugmittelspanneinrichtung in ausgekuppelter Position
- Figur 2: eine Detailansicht der Zugmittelspanneinrichtung nach Figur 1
- Figur 3: eine schematische Darstellung der Zugmittelspanneinrichtung nach Figur 1 während des Einkuppelns
- Figur 4: eine schematische Darstellung der Zugmittelspanneinrichtung nach Figur 1 in eingekuppelter Position

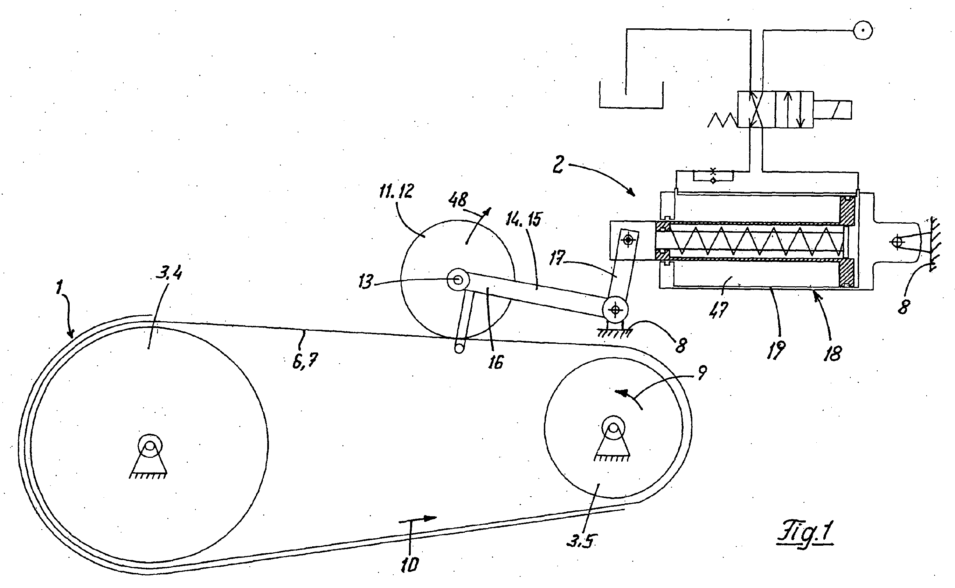

Figur 1 zeigt eine schematische Seitenansicht eines Zugmittelgetriebes 1 mit erfindungsgemäßer Zugmittelspanneinrichtung 2. Das Zugmittelgetriebe 1 wird von einem ersten, als Riemenscheibe 4 ausgeführten Umlenkelement 3 und einem diesem zugeordneten weiteren, ebenfalls als Riemenscheibe 5 ausgeführten Umlenkelement 3 sowie einem um diese Riemenscheiben 4, 5 endlos umlaufenden als Transmissionsriemen 6 ausgeführten Zugmittel 7 gebildet. Die Riemenscheiben 4, 5 sind in an sich bekannter Weise drehbar im Gestell 8 einer nicht näher dargestellten Maschine gelagert. Es liegt im Rahmen der Erfindung, dass das Zugmittel 7 von beliebigem Querschnitt sein kann und abweichend vom dargestellten Ausführungsbeispiel von einer Vielzahl von Riemenscheiben 4, 5 geführt werden kann.

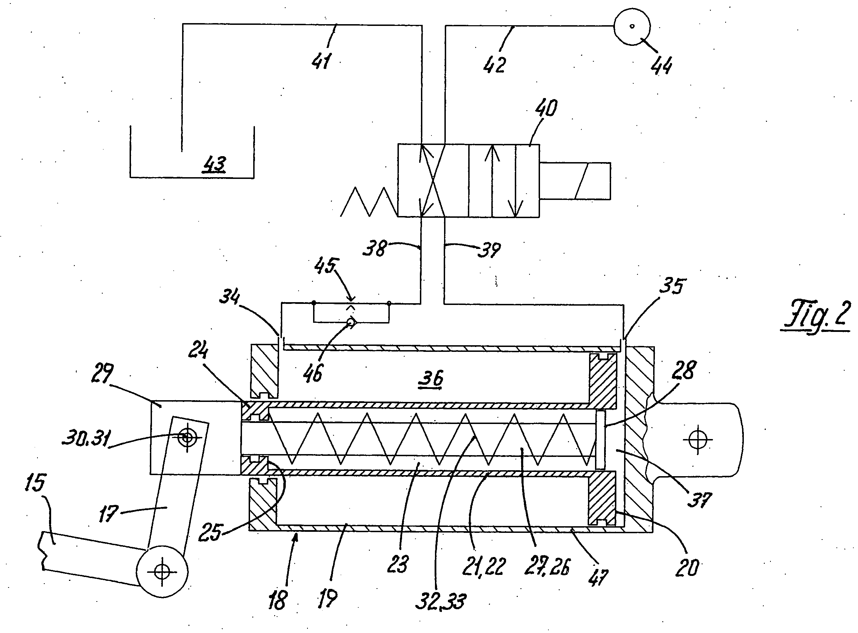

Die im rückwärtigen Bereich des Zugmittelgetriebes 1 angeordnete kleinere Riemenscheibe 5 wird gemäß Pfeilrichtung 9 angetrieben, sodass sich das Zugmittel 7 gemäß Pfeilrichtung 10 bewegt. Damit bildet der obenseitige Riemenabschnitt des Zugmittels 7 das Losdrum, welches mit dem als frei drehbare Spannrolle 11 ausgeführten Spannelement 12 der Zugmittelspanneinrichtung 2 in Wirkverbindung steht. Die Drehachse 13 der Spannrolle 11 wird einenends von einem als Winkelhebel 14 ausgeführten im Maschinengestell 8 gelagerten Schwenkmechanismus 15 aufgenommen. Der Winkelhebel 14 wird im dargestellten Ausführungsbeispiel von einem ersten, die Spannrolle 11 aufnehmenden Hebelarm 16 und einem mit diesem Hebelarm 16 drehfest verbundenen weiteren Hebelarm 17 gebildet, wobei der weitere Hebelarm 17 an seinem freien Ende mit einem Verstellantrieb 18 in Wirkverbindung steht. Der Verstellantrieb 18 ist ebenfalls im Maschinengestell 8 gelagert und wird im dargestellten Ausführungsbeispiel von einem, in Fig. 2 im Detail dargestellten doppeltwirkenden Hubzylinder 19 gebildet. Die Kolbenfläche 20 sowie die das erfindungsgemäße erste Kolbenstangenelement 21 bildende Kolbenstange 22 des Hubzylinders 19 werden von einer Durchgangsbohrung 23 mit bereichsweise verschiedenen Durchmessern durchsetzt. An ihrem dem Schwenkmechanismus 15 zugeordneten Ende ist der Kolbenstange 22 ein zylinderförmiger Absatz 24 angeformt, der von dem den kleineren Durchmesser aufweisenden Bereich der Durchgangsbohrung 23 durchsetzt wird. Im Übergangsbereich zwischen dem kleineren Durchmesser und dem größeren Durchmesser der Durchgangsbohrung 23 bildet der zylinderförmige Absatz 24 eine innere Anschlagfläche 25 aus. Die Durchgangsbohrung 23 der Kolbenstange 22 wird in erfindungsgemäßer Weise von einem so genannten Tauchkolben oder Plunger 27 durchsetzt, dessen Außendurchmesser annähernd dem kleineren Durchmesser der Durchgangsbohrung 23 der Kolbenstange 22 entspricht, wobei der Tauchkolben 27 das erfindungsgemäße weitere Kolbenstangenelement 26 bildet. An seinem der Kolbenfläche 20 der Kolbenstange 22 des Hubzylinders 19 zugewandten Ende ist dem Tauchkolben 27 ebenfalls eine Kolbenfläche 28 angeformt, deren Außendurchmesser etwa dem größeren Durchmesser der Durchgangsbohrung 23 entspricht. Am Schwenkmechanismus 15 -seitigen Ende ist dem Tauchkolben 27 ein Kopfstück 29 angeformt welches über eine im einfachsten Fall als Schraubverbindung 30 ausgeführte Schwenkachse 31 mit dem einen Hebelarm 17 des Schwenkmechanismus 15 gelenkig verbunden ist. Indem einerseits der Tauchkolben 27 einen Außendurchmesser aufweist der annähernd dem Durchmesser der Durchgangsbohrung 23 im Bereich des Absatzes 24 entspricht und zum Anderen die Kolbenfläche 28 des Tauchkolbens 27 an den größeren Durchmesser der Durchgangsbohrung 23 der Kolbenstange 22 angepasst ist, kann der Tauchkolben 27 innerhalb der Durchgangsbohrung 23 bewegt werden, wobei er im Bereich des Absatzes 24 durch diesen und über seine Kolbenfläche 28 im Bereich der Durchgangsbohrung 23 mit dem größeren Durchmesser abgestützt wird. In erfindungsgemäßer Weise wird der von der inneren Anschlagfläche 25 und der Kolbenfläche 28 des Tauchkolbens 27 begrenzte Bereich der Durchgangsbohrung 23 der Kolbenstange 22 des Hubzylinders 19 von einem als Druckfeder 33 ausgeführten elastischen Element 32 durchsetzt, das im druckfreien Zustand des Hubzylinders 19 das Kopfstück 29 des Tauchkolbens 27 gegen den zylinderförmigen Absatz 24 der Kolbenstange 22 des Hubzylinders 19 presst. Die nur schematisch dargestellten Leitungsanschlüsse 34, 35 der kolbenstangenseitigen Druckkammer 36 und der kolbenflächenseitigen Druckkammer 37 des Hubzylinders 19 sind über an sich bekannte Leitungssysteme 38, 39 mit einem schaltbaren Zweiwegeventil 40 verbunden, wobei das schaltbare Zweiwegeventil 40 eingangsseitig über Leitungssysteme 41, 42 mit einem Tank 43 und einem als Pumpe 44 ausgeführten Druckölstromerzeuger verbunden sind, wobei es für eine erfindungsgemäße Ausführung unerheblich ist, wo die Hydraulikkomponenten Pumpe 44, Tank 43, Zweiwegeventil 40 und die Leitungssysteme 38, 39, 41, 42 an einer nicht näher dargestellten Maschine zur Versorgung des Hubzylinders 19 angeordnet sind. Dem die kolbenstangeseitige Druckkammer 36 mit dem Zweiwegeventil 40 verbindenden Leitungssystem 38 sind jeweils ein in Parallelschaltung angeordnetes Drosselventil 45 sowie ein Rückschlagventil 46 zwischengeschaltet, wobei die Sperrrichtung des Rückschlagventils 46 von der kolbenstangenseitigen Druckkammer 36 zum Zweiwegeventil 40 verläuft.

Befindet sich das Zweiwegeventil 40 in der in Figur 2 im Detail dargestellten Schaltstellung, wird die kolbenstangenseitige Druckkammer 36 des Hubzylinders 19 druckbeaufschlagt, während die kolbenflächenseitige Druckkammer 37 drucklos mit dem Tank 43 verbunden ist. In dieser Schaltstellung wird der Druckölstrom im Wesentlichen über das in dieser Richtung öffnende Rückschlagventil 46 der kolbenstangeseitigen Druckkammer 36 des Hubzylinders 19 zugeführt, wobei die Kolbenstange 22 in ihre tiefstmögliche Stellung in den Zylinder 47 des Hubzylinders 19 eingeschoben wird. Aufgrund der drucklosen kolbenflächenseitigen Druckkammer 37 unterstützt die Druckfeder 33 dabei die Bewegung des Tauchkolbens 27 in Richtung der Kolbenfläche 20 des Hubzylinders 19, wobei der Schwenkmechanismus 15 und die mit ihm drehbar verbundene Spannrolle 11 gemäß Pfeilrichtung 48 im Uhrzeigersinn vom Leerdrum des Zugmittels 7 wegschwenkt. Eine Druckbeaufschlagung des Hubzylinders 19 gemäß den Figuren 1 und 2 führt somit zum Auskuppeln der Zugmittelspanneinrichtung 2.

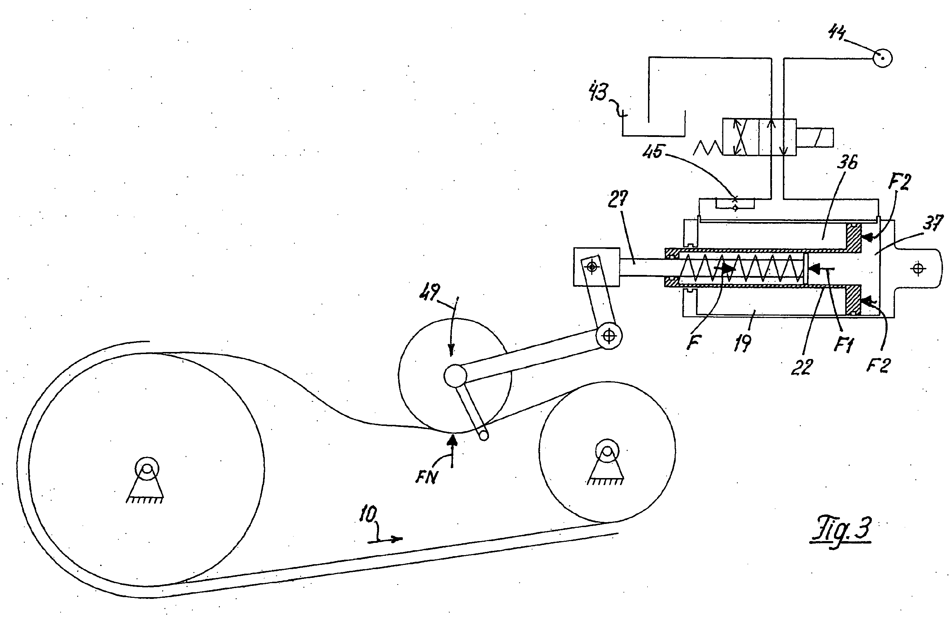

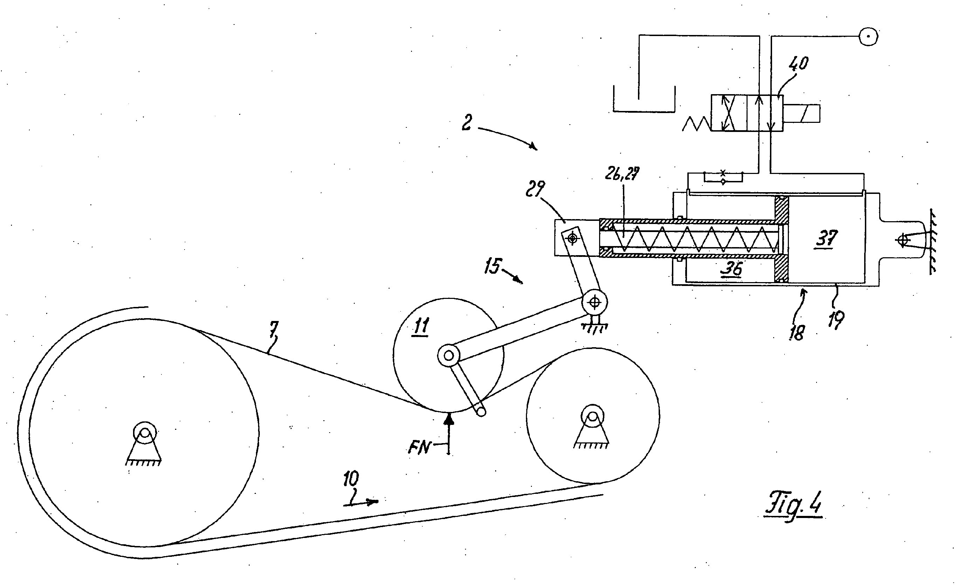

Wird nun das Zweiwegeventil 40 in die in Fig. 3 dargestellte Position geschaltet, gelangt der von der Pumpe 44 erzeugte Druckölstrom in die kolbenflächenseitige Druckkammer 37 des Hubzylinders 19. Dabei bewegen sich sowohl die Kolbenstange 22 als auch der Tauchkolben 27 aus dem Hubzylinder 19 heraus. Das in der kolbenstangenseitigen Druckkammer 36 befindliche Medium wird hierbei gegen die Wirkung einer Drossel 45 aus dieser Druckkammer 36 in Richtung Tank 43 herausgeschoben, sodass die Kolbenstange 22 mit einer niedrigeren Geschwindigkeit aus dem Zylinder 47 herausfährt als dies beim Einfahren der Kolbenstange 22 der Fall ist. Während der Druckbeaufschlagung der kolbenflächenseitigen Druckkammer 37 wird zugleich der Tauchkolben 27 gegen die Wirkung der Druckfeder 33 aus der Kolbenstange 22 herausgeschoben. Der Drosselquerschnitt des Drosselventils 45 ist dabei so gewählt, dass der Verschwenkmechänismus 15 zunächst nur von dem Tauchkolben 27 gegen die Wirkung der Druckfeder 33 gemäß Pfeilrichtung 49 verschwenkt wird, das heißt, der Tauchkolben 27 tritt schneller aus dem Zylinder 47 des Hubzylinders 19 aus als die Kolbenstange 22. Bewegt sich der Schwenkmechanismus 15 gemäß Pfeilrichtung 48 auf das Zugmittel 7 zu, greift die Spannrolle 11 im Bereich des Leerdrums in das Zugmittel 7 ein. Aufgrund dessen, dass die Kolbenfläche 28 des Tauchkolbens 27 kleiner als die Kolbenfläche 20 der Kolbenstange 22 ist und in der kolbenflächenseitige Druckkammer 37 überall der gleiche Druck anliegt, ist die am Tauchkolben 27 angreifende Kraft F1 geringer als die an der Kolbenstange 22 angreifende Kraft F2. Zugleich muss die Kraft F1 auch noch die Federkraft F der Druckfeder 33 überwinden. Dies führt dazu, dass die Spannrolle 11 zunächst nur mit geringer Anpresskraft FN auf das Zugmittel 7 einwirkt, sodass das Zugmittel 7 beim Einkuppeln der Zugmittelspanneinrichtung 2 mit ausreichendem Schlupf anlaufen kann. Dies hat vor allem den Vorteil, dass die den Verschleiß fördernde Belastung des Zugmittelgetriebes 1 und nicht dargestellter von diesem Zugmittelgetriebe 1 angetriebener Organen beim Einkuppeln der Zugmittelspanneinrichtung 2 nur allmählich zunimmt. Diese den Schlupf des Zugmittels 7 begünstigende Einkuppelphase hält solange an, bis der beispielsweise an der Pumpe 44 einstellbare maximale Systemdruck erreicht ist, bei dem die Kolbenstange 22 so weit aus dem Kolben 47 des Hubzylinders 19 ausgefahren ist, dass der der Kolbenstange 22 obenseitig angeformte Absatz 24 an dem Kopfstück 29 des Tauchkolbens 27 anliegt, sodass nun entsprechend Fig. 4 sowohl der Tauchkolben 27 als auch die Kolbenstange 22 des Hubzylinders 19 den Schwenkmechanismus 15 gemäß Pfeilrichtung 49 in Richtung des Zugmittels 7 verschwenken, wobei nun die Anpresskraft FN der Spannrolle 11 von dem maximalen, durch die Pumpe 44 bereitgestellten Systemdruck bestimmt wird. Die in Fig. 4 dargestellte Position der Spannrolle 11 entspricht der vollständigen Einkuppelstellung der Zugmittelspanneinrichtung 2. Soll nun die Spanneinrichtung wieder ausgekuppelt werden, muss das Zweiwegeventil 40 in die in den Figuren 1 und 2 dargestellte Position geschaltet werden und es beginnt der bereits beschriebene Auskuppelvorgang von neuem.

### Bezugszeichenliste

- 1: Zugmittelgetriebe
- 2: Zugmittelspanneinrichtung
- 3: Umlenkelement
- 4: Riemenscheibe
- 5: Riemenscheibe
- 6: Transmissionsriemen
- 7: Zugmittel
- 8: Gestell
- 9: Pfeilrichtung
- 10: Pfeilrichtung
- 11: Spannrolle
- 12: Spannelement
- 13: Drehachse
- 14: Winkelhebel
- 15: Schwenkmechanismus
- 16: Hebelarm
- 17: Hebelarm
- 18: Verstellantrieb
- 19: Hubzylinder
- 20: Kolbenfläche
- 21: Kolbenstangenelement
- 22: Kolbenstange
- 23: Durchgangsbohrung
- 24: Absatz
- 25: Anschlagfläche
- 26: Kolbenstangenelement
- 27: Tauchkolben
- 28: Kolbenfläche
- 29: Kopfstück
- 30: Schraubverbindung
- 31: Schwenkachse
- 32: elastisches Element
- 33: Druckfeder
- 34: Leitungsanschluss
- 35: Leitungsanschluss
- 36: kolbenstangenseitige Druckkammer
- 37: kolbenflächenseitige Druckkammer
- 38: Leitungssystem
- 39: Leitungssystem
- 40: Zweiwegeventil
- 41: Leitungssystem
- 42: Leitungssystem
- 43: Tank
- 44: Pumpe
- 45: Drosselventil
- 46: Rückschlagventil
- 47: Zylinder
- 48: Pfeilrichtung
- 49: Pfeilrichtung

- F1: Tauchkolbenkraft
- F2: Kolbenstangenkraft
- F: Federkraft

## Patentansprüche

1. Zugmittelspanneinrichtung eines Zugmittelgetriebes, dessen Zugmittel von Umlenkelementen geführt und angetrieben wird, wobei dem Zugmittel wenigstens eine mittels wenigstens eines Verstellantriebs verschwenkbare Spanneinrichtung zugeordnet ist und durch Verschwenken der Spanneinrichtung deren Spannelement mit dem Zugmittel in und außer Eingriff bringbar ist,
**dadurch gekennzeichnet,**
**dass** das Spannelement (11, 12) mit dem wenigstens einen Verstellantrieb (18, 19) über zumindest ein elastisches Element (32) in Wirkverbindung steht.

2. Zugmittelspanneinrichtung nach Anspruch 1,
**dadurch gekennzeichnet,**
**dass** das Spannelement (11, 12) drehbar von zumindest einem Schwenkmechanismus (15) aufgenommen wird und der Schwenkmechanismus (15) gelenkig mit dem wenigstens einen das Spannelement (11, 12) mit dem Verstellantrieb (18, 19) verbindenden elastischen Element (32) gekoppelt ist.

3. Zugmittelspanneinrichtung nach einem oder mehreren der vorhergehenden Ansprüche,
**dadurch gekennzeichnet,**
**dass** der Verstellantrieb (18) als Hubzylinder (19) ausgeführt ist, wobei die Kolbenstange (22) des Hubzylinders (19) von zumindest einem ersten Kolbenstangenelement (21) und zumindest einem weiteren Kolbenstangenelement (26) gebildet wird und die wenigsten zwei Kolbenstangenelemente (21, 26) gegeneinander verschiebbar sind und zwischen sich das zumindest eine elastische Element (32) aufnehmen.

4. Zugmittelspanneinrichtung nach Anspruch 3,
**dadurch gekennzeichnet,**
**dass** das zumindest eine erste Kolbenstangenelement (21) von der Kolbenstange (22) des Hubzylinders (19) und das zumindest eine weitere Kolbenstangenelement (26) von einem Tauchkolben oder Plunger (27) gebildet wird und der Tauchkolben (27) innerhalb der Kolbenstange (22) des Hubzylinders (19) in einer Durchgangsbohrung (23) längsbeweglich angeordnet ist.

5. Zugmittelspanneinrichtung nach einem oder mehreren der vorhergehenden Ansprüche,
**dadurch gekennzeichnet,**
**dass** der Hubzylinder (19) als doppeltwirkender Hubzylinder (19) ausgebildet ist.

6. Zugmittelspanneinrichtung nach einem oder mehreren der vorhergehenden Ansprüche,
**dadurch gekennzeichnet,**
**dass** der kolbenstangenseitigen Druckkammer (36) des Hubzylinders (19) ein Leitungssystem (38) zugeordnet ist, dem ein in Parallelschaltung angeordnete Drosselventil (45) - Rückschlagventil (46) - Kombination zwischengeschaltet ist, wobei die Sperrstellung des Rückschlagventils (46) von der kolbenstangenseitigen Druckkammer (36) zu nachgeordneten Organen (38-44) verläuft.

7. Zugmittelspanneinrichtung nach einem oder mehreren der vorhergehenden Ansprüche,
**dadurch gekennzeichnet,**
**dass** die Lage des zumindest einen elastischen Elements (32) zwischen den Kolbenstangenelementen (21, 26) des Hubzylinders (19) durch Anschläge (24, 25, 28) begrenzt wird.

8. Zugmittelspanneinrichtung nach Anspruch 7,
**dadurch gekennzeichnet,**
**dass** die Anschläge (24, 25, 28) unmittelbar an den Kolbenstangenelementen (21, 26) ausgebildet sind.

9. Zugmittelspanneinrichtung nach einem oder mehreren der vorhergehenden Ansprüche,
**dadurch gekennzeichnet,**
**dass** das zumindest eine elastische Element (32) eine Druckfeder (33) ist.
